# EUROPEAN PATENT SPECIFICATION

(11) **EP 3 375 147 B1**
(45) Date of publication and mention of the grant of the patent: **05.08.2020**
(21) Application number: 15817771.7
(22) Date of filing: 04.12.2015
(51) Int. Cl.: H04L 29/08, H04L 12/28, H04L 12/46

(54) **METHOD FOR ESTABLISHING DATA TRAFFIC BETWEEN A CLIENT DEVICE AND ONE OR MORE DEVICES OF AN OPERATOR'S NETWORK**
VERFAHREN ZUM AUFBAU VON DATENVERKEHR ZWISCHEN EINER CLIENT-VORRICHTUNG UND EINER ODER MEHREREN VORRICHTUNGEN EINES BETREIBERNETZES
PROCÉDÉ D'ÉTABLISSEMENT DE TRAFIC DE DONNÉES ENTRE UN DISPOSITIF CLIENT ET UN OU PLUSIEURS DISPOSITIFS D'UN RÉSEAU D'OPÉRATEUR

(43) Date of publication of application: 19.09.2018
(73) Proprietor: NEC Corporation, Tokyo 108-8001 (JP)
(72) Inventor: BIFULCO, Roberto, 69115 Heidelberg (DE); DIETZ, Thomas, 67366 Weingarten (DE)
(74) Representative: Patent- und Rechtsanwälte Ullrich & Naumann
(86) International application number: PCT/EP2015/078634
(87) International publication number: WO 2017/092822

(56) References cited:
- EP-A1- 2 747 350
- WO-A1-2014/096173
- US-A1- 2010 165 993
- US-A1- 2013 173 797
- Daniel Abgrall: "Virtual Home Gateway How can Home Gateway virtualization be achieved?", Eurescom published study result; EDIN 0599-2055, 30 September 2011 (2011-09-30), pages 1-86, XP055168346, Retrieved from the Internet: URL:http://archive.eurescom.eu/~pub-delive rables/P2000-series/P2055/D1/P2055-D1.pdf [retrieved on 2015-02-09]

## Description

The present invention relates to a method for establishing a data connection between a client device, 'CD' in a client network, and one or more of devices, 'OD', of an operator's network, wherein said OD are connected with said CD via one or more access devices, 'AD', of an access network, wherein said networks are organized in abstraction layers, for example according to the OSI model, and wherein said CD are adapted to work on a first abstraction layer, 'AL', and wherein said OD are adapted to work on a second AL.

The present invention further relates to an access device 'AD', for establishing a data connection between a client device, 'CD' in a client network, and one or more of devices, 'OD', of an operator's network, wherein said OD are connected with said CD via one or more access devices, 'AD', of an access network, wherein said networks are organized in abstraction layers, for example according to the OSI model, and wherein said CD are adapted to work on a first abstraction layer, 'AL', and wherein said OD are adapted to work on a second AL.

The present invention even further relates to a method, performed on an access device, 'AD', for establishing a data connection between a client device, 'CD' in a client network, and one or more of devices, 'OD', of an operator's network, wherein said OD are connected with said CD via one or more access devices, 'AD', of an access network, wherein said networks are organized in abstraction layers, for example according to the OSI model, and wherein said CD are adapted to work on a first abstraction layer, 'AL', and wherein said OD are adapted to work on a second AL.

The present invention further relates to a system for establishing a data connection between a client device, 'CD' in a client network, and one or more of devices, 'OD', of an operator's network, wherein said OD are connected with said CD via one or more access devices, 'AD', of an access network, wherein said networks are organized in abstraction layers, for example according to the OSI model, and wherein said CD are adapted to work on a first abstraction layer, 'AL', and wherein said OD are adapted to work on a second AL.

The present invention even further relates to a non-transitory computer readable medium storing a program causing a computer to execute a method for establishing a data connection between a client device, 'CD' in a client network, and one or more of devices, 'OD', of an operator's network, wherein said OD are connected with said CD via one or more access devices, 'AD', of an access network, wherein said networks are organized in abstraction layers, for example according to the OSI model, and wherein said CD are adapted to work on a first abstraction layer, 'AL', and wherein said OD are adapted to work on a second AL. The invention is disclosed in the appended claims.

Although applicable in general to any kind of networks the present invention will be described with regard to telecommunication networks, in particular to virtual customer premises equipment networks.

Virtual customer premises equipments, 'vCPE', are used to move customer premises equipment, 'CPE', functions to an operator's network. The customer premises equipment for example becomes a simple layer 2 bridge like an Ethernet switch or the like while all the layer 3 services are provided by the operator's network, for example routing, firewall, network address translation NAT or the like. In such network subscriber authentication is performed using the information provided in so-called QinQ tags carried by the network packets. Such a QinQ tag is a combination of two VLAN tags added to the subscriber's network packets when they traverse the operator network's access nodes. The corresponding identifier allows for an easy setup of the connection. Any packet coming from the subscriber's premises will be automatically tagged at the access DSLAM, also called MSAN. The DSLAM, being a trusted component of the operator's network, avoids any further identification procedure. That is, a subscriber is identified by its geographic position, practically, the DSLAM port to which she is attached.

The packets that are delivered to the operator's network are always carrying the QinQ tags, which work as in-line meta-data to identify the subscriber's traffic. The creation of a subscriber session in the operator's network has been conventionally a responsibility of the Broadband Network Gateway, 'BNG', which provides e.g., authentication, QoS enforcement, etc. In a vCPE network environment, the BNG may be replaced by one or more different devices, which provide similar services. The term "vCPE infrastructure" identifies any implementation of those services in the operator's network. Thus, in a vCPE network environment, the devices of the vCPE infrastructure establish a subscriber context upon reception of a DHCP request that is encapsulated in a QinQ network packet. In particular, the subscriber context creation works as follows:
1. a subscriber's network device creates a DHCP request to obtain a valid IP address in the subscriber's home network;
2. The DSLAM adds the QinQ tag to the DHCP request;
3. The BNG receives the request and establishes the subscriber context (which is used for e.g., QoS enforcement);
4. The BNG answers with a DHCP response for the subscriber;
5. The DSLAM removes the QinQ tag;
6. The subscriber's network device receives the DHCP response and configures its network interface.

Document EP2747350 discloses a method of establishing a Layer2 sub-tunnel between the CPE and a virtual Home Gateway. However one of the problems addressed by embodiments of the present invention is the transformation of broadband access networks from L3 (e.g. IP) networks to L2 (e.g., Ethernet) networks due to the introduction of vCPE architectures. Although this transformation is expected to be eventually applied for the entire customer base of an operator, still, a transitioning period in which same users already use vCPE and others not is present, since it is unrealistic to replace L3 access networks at once, in current infrastructures. Furthermore, it is not possible to forecast how long the transition will last, thus, it is not possible to rely on the presence of legacy network functions to provide the required L3 functionalities, in the long run, for the subset of subscribers that did not transitioned to the L2 network yet.

Consequently operators are faced with the problem to provide support for the remaining subscribers, who are still using L3 access networks, reducing the provisioning costs and leveraging the virtualized network infrastructure that has been introduced with L2 access networks, such as the ones implemented in the vCPE architecture.

Thus, one of the further problems addressed by embodiments of the present invention is to reduce provisioning costs and leveraging the virtualized infrastructure.

In an embodiment the present invention relates to a method for establishing a data connection between a client device, 'CD' in a client network, and one or more of devices, 'OD', of an operator's network, wherein said OD are connected with said CD via one or more access devices, 'AD', of an access network, wherein said networks are organized in abstraction layers, for example according to the OSI model, and wherein said CD are adapted to work on a first abstraction layer, 'AL', and wherein said OD are adapted to work on a second AL,
comprising the steps of
a) Receiving a session establishment request by said AD provided by said CD on said first AL,
b) Extracting client information from said session establishment request by said AD,
c) Establishing a session by said AD with said OD on said second AL using said extracted client information, when said second AL being different from said first AL,
d) Extracting client network information from received information from said OD during said session establishment between said AD and said OD,
e) Terminating session establishment with said CD by said AD using said extracted client network information to establish a session between said CD and said OD to provide a data connection..

In a further embodiment the present invention provides an access device, 'AD', for establishing a data connection between a client device, 'CD' in a client network, and one or more of devices, 'OD', of an operator's network, wherein said OD are connected with said CD via one or more access devices, 'AD', of an access network, wherein said networks are organized in abstraction layers, for example according to the OSI model, and wherein said CD are adapted to work on a first abstraction layer, 'AL', and wherein said OD are adapted to work on a second AL, comprising the steps of
a) Receiving a session establishment request provided by said CD on said first AL,
b) Extracting client information from said session establishment request,
c) Establishing a session with said OD on said second AL using said extracted client information, when said second AL being different from said first AL,
d) Extracting client network information from received information from said OD during said session establishment with said OD,
e) Terminating session establishment with said CD using said extracted client network information to establish a session between said CD and said OD to provide a data connection.

In a further example the present invention provides a method, performed on an access device, 'AD', for establishing a data connection between a client device, 'CD' in a client network, and one or more of devices, 'OD', of an operator's network, wherein said OD are connected with said CD via one or more access devices, 'AD', of an access network, wherein said networks are organized in abstraction layers, for example according to the OSI model, and wherein said CD are adapted to work on a first abstraction layer, 'AL', and wherein said OD are adapted to work on a second AL, comprising the steps of
a) Receiving a session establishment request provided by said CD on said first AL,
b) Extracting client information from said session establishment request,
c) Establishing a session with said OD on said second AL using said extracted client information, when said second AL being different from said first AL,
d) Extracting client network information from received information from said OD during said session establishment with said OD,
e) Terminating session establishment with said CD using said extracted client network information to establish a session between said CD and said OD to provide a data connection.

In a further embodiment the present invention provides a system for establishing a data connection between a client device, 'CD' in a client network, and one or more of devices, 'OD', of an operator's network, wherein said OD are connected with said CD via one or more access devices, 'AD', of an access network, wherein said networks are organized in abstraction layers, for example according to the OSI model, and wherein said CD are adapted to work on a first abstraction layer, 'AL', and wherein said OD are adapted to work on a second abstraction layer,
said CD being adapted to
to provide a session establishment request to said AD said AD being adapted
to receive a session establishment request provided by said CD on said first AL,
to extract client information from said session establishment request, to establish a session with said OD on said second AL using said extracted client information, when said second AL being different from said first AL,
to extracting client network information from received information from said OD during said session establishment between said AD and said OD, and
to terminate session establishment with said CD using said extracted client network information to establish a session between said CD and said OD to provide a data connection,
said OD being adapted to
to establish a session with said AD on a second layer using said extracted client information, and
to provide client network information.

In a further embodiment the present invention provides a non-transitory computer readable medium storing a program causing a computer to execute a method for establishing a data connection between a client device, 'CD' in a client network, and one or more of devices, 'OD', of an operator's network, wherein said OD are connected with said CD via one or more access devices, 'AD', of an access network, wherein said networks are organized in abstraction layers, for example according to the OSI model, and wherein said CD are adapted to work on a first abstraction layer, 'AL', and wherein said OD are adapted to work on a second AL, comprising the steps of
a) Receiving a session establishment request by said AD provided by said CD on said first AL,
b) Extracting client information from said session establishment request by said AD,
c) Establishing a session by said AD with said OD on said second AL using said extracted client information, when said second AL being different from said first AL,
d) Extracting client network information from received information from said OD during said session establishment between said AD and said OD,
e) Terminating session establishment with said CD by said AD using said extracted client network information to establish a session between said CD and said OD to provide a data connection.

At least one embodiment may have at least one of the following advantages:
- seamless and easy integration of the access networks without changing infrastructure and/or a virtualized customer premises equipment architecture,
- enhanced flexibility since networks do not have to be changed at once,
- reduced provisioning costs since a step by step migration of the "old" networks to the "new" networks is enabled,
- providing an enhanced virtualized infrastructure

The term "computing device", or "computing entity", "client device", "operator's device", "access device", etc. refer in particular in the claims, preferably in the description each to a device adapted to perform computing like a personal computer, a tablet, a mobile phone, a server, or the like and comprises one or more processors having one or more cores and may be connectable to a memory for storing an application which is adapted to perform corresponding steps of one or more of the embodiments of the present invention. Any application may be software based and/or hardware based installed in the memory on which the processor(s) can work on. The computing devices or computing entities may be adapted in such a way that the corresponding steps to be computed are performed in an optimized way. For instance different steps may be performed in parallel with a single processor on different of its cores. Said devices or entities may each have one or more interfaces to communicate with the environment, e.g. other devices, humans, etc.

The term "computer readable medium" may refer to any kind of medium, which can be used together with a computation device or computer and on which information can be stored. Said information may be any kind of data which can be read into a memory of a computer. For example said information may include program code for executing with said computer. Examples of a computer readable medium are tapes, CD-ROMs, DVD-ROMs, DVD-RAMs, DVD-RWs, BluRay, DAT, MiniDisk, solid state disks SSD, floppy disks, SD-cards, CF-cards, memory-sticks, USB-sticks, EPROM, EEPROM or the like.

The term "OSI model" refers to the Open Systems Interconnection model within the Open Systems Interconnection project at the International Organization for Standardization ISO, maintained by the identification ISO/IEC 7498-1.

Further features, advantages and further embodiments are described and may become apparent in the following:
Said first and second AL may be adjacent AL. This enables an easy implementation.

Said first AL is a layer 3 according to the OSI model and said second AL is a layer 2 according to the OSI model. This enables an even more easier implementation while enabling an easy introduction of virtualized customer premises equipment architectures: Transformation of broadband access networks from L3 to L2 is enabled.

Said AD may be bypassed for data traffic when said first and second AL are identical. This saves computational resources as well as increases the Quality of Service, 'QoS', since time consuming transitions between the different layers are only performed if necessary.

By said AD a request on said first AL may be tagged with an encap tag representing said client information for transmitting said client information to said OD. Tagging enables an easy transportation of client information such that a "translation" between different layers is reliably enabled. Said encap tag works in general as in-line meta-data to identify the traffic of a subscriber by an operator.

Such client information may be mapped to said encap tag based on a static mapping or provided by a service device. This enables a reliable mapping while being flexible in terms of the source of the mapping.

Said CD may provide said session establishment request of step a) by issuing a DHCP request and/or by issuing a PPP request. This enables a reliable performance of step a) in an easy way.

Step c) may be performed by issuing a DHCP request. This enables an efficient performance of step c) since for example when step a) is performed using a DHCP request said DHCP request can also be used for performing step c) e.g. additionally provided with a tag, e.g. a QinQ tag.

Said client network information may include IP configuration information. This ensures an easy and reliable identification of the client network.

Said encap tag may be a QinQ tag. This enables an easy implementation for example when a DHCP request packet is tagged with a QinQ tag when passing through the operator's network access nodes. Said QinQ tag is then used as identifier to retrieve the subscriber policy attributes, for example performing a request to a radius AAA server and generate an IP address network configuration for the subscriber which are finally used to compile a DHCP reply.

There are several ways how to design and further develop the teaching of the present invention in an advantageous way. To this end it is to be referred to the patent claims subordinate to the independent patent claims on the one hand and to the following explanation of further embodiments of the invention by way of example, illustrated by the figure on the other hand. In connection with the explanation of the further embodiments of the invention by the aid of the figure, generally further embodiments and further developments of the teaching will be explained.

In the drawings
- Fig. 1: shows a conventional system for establishing data traffic between the client device and operator's infrastructure;
- Fig. 2: shows in more detail a conventional system for establishing data traffic between the client device and the broadband network gateway;
- Fig. 3: shows a system according to an embodiment of the present invention;
- Fig. 4: shows part of steps of a method according to a further embodiment of the present invention;
- Fig. 5: shows part of the steps of a method according to a further embodiment of the present invention;

- Fig. 6: shows steps of a method according to a further embodiment of the present invention;
- Fig. 7: shows steps of a method according to a further embodiment of the present invention and
- Fig. 8: show more detailed steps of a method according to Fig. 7.

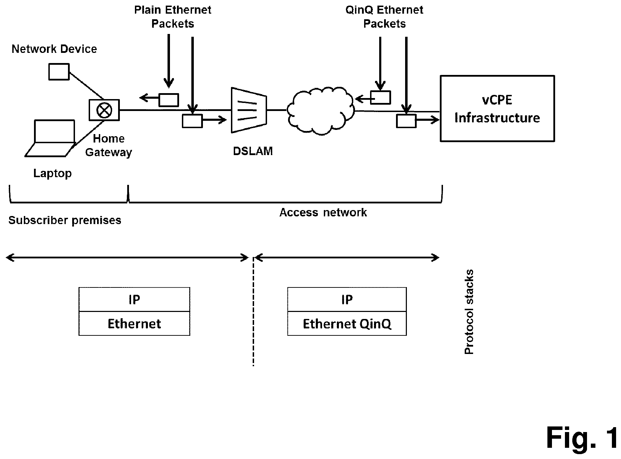

Fig. 1 shows a conventional system for establishing a data connection between the client device and operator's infrastructure.

In Fig. 1 a schematic representation of a virtual customer premises equipment architecture and the corresponding packet header formats in different parts of the networks are shown. The subscriber level 2 network is extended to the access network. The home gateway HGW is providing in form of a simple L2 bridge, i.e. L2 CPE. The subscriber premises comprise a laptop and a network device both connected to the home gateway HGW. The home gateway HGW exchanges plain Ethernet packets with a DSLAM which exchanges QinQ Ethernet packets with the virtual customer premises equipment infrastructure being part of the access network between the DSLAM and the subscriber premises. The protocol stack is based on IP and Ethernet whereas in the access network the protocol stack comprises IP and Ethernet QinQ. Thus, the packets that are delivered to the operator's network are always carrying the QinQ tags which can be in general understood as inline metadata to identify the subscribers, i.e. client's traffic.

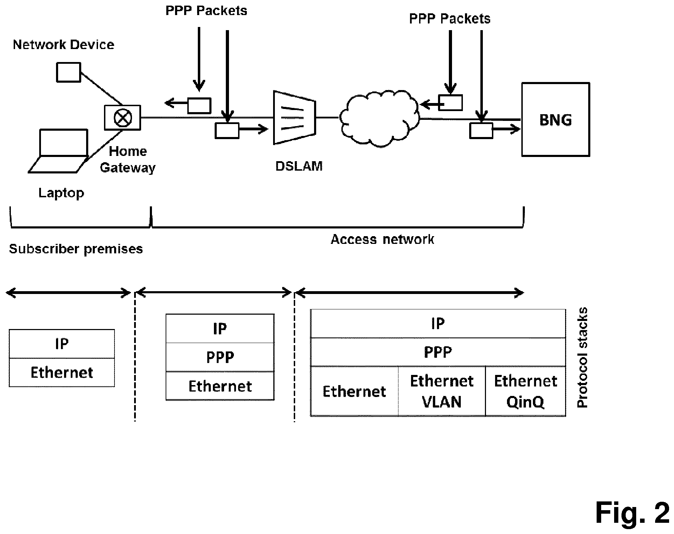

Fig. 2 shows in more detail a conventional system for establishing a data connection between the client device and the broadband network gateway.

In Fig. 2 a schematic representation of a level 3 broadband network architecture and the corresponding packet header formats in different parts of the network are shown. The subscriber's level 2 network is terminated at the home gateway (L3 CPE). After the DSLAM, the network packets may use different L2 network technologies such as plain Ethernet, Ethernet VLAN's, Ethernet QinQ, etc.

Here a broadband access networks are provided in form of a L3 network, i.e., it is based on IP connectivity. The subscriber's Home Gateway (HGW) works as a router, which forwards packets to and from the subscriber's network. The HGW creates a subscriber's session in first place, to establish a subscriber context in the operator's network. Such a session can be established using different technologies. Here, PPP/PPPoE protocols are used to establish subscribers' sessions. PPP/PPPoE is a widely deployed technology, in particular in Europe and it can be deployed on a wide variety of network architectures, such as plain Ethernet, VLAN, QinQ (also on top of different VLAN assignment strategies, e.g., N-to-1, M-to-N, etc.).

When using PPP/PPPoE, the subscriber's HGW creates a point-to-point tunnel with the operator's Broadband Network Gateway BNG. The tunnel ensures that the subscriber network traffic is separated from other subscribers' traffic. Furthermore, the tunnel ensures the subscriber identification. In fact, the session establishment process mandates the exchange of credentials in the beginning of the session creation and, during this phase, a unique tunnel identifier is also defined.

In detail the Point-to-point Protocol over Ethernet (PPPoE) is a network protocol for encapsulating PPP frames inside Ethernet Frames. It is used mainly by Telecommunication providers to deploy Internet services using existing DSL Technology. For instance, a customer has a PPPoE speaking modem which connects to the DSL service before starting to transmit data. PPPoE allows them to secure communications through the use of user identification and authentication.

Session establishment in PPPoE is performed through the exchange of two categories of PPPoE messages: session messages transported by Ethernet frames with EtherType 0x8863 and data messages transported by frames with EtherType 0x8864. To forward the traffic between a client and a BNG, a PPP tunnel should be established between them. The phase where client and server exchange frames with EtherType 0x8863 is named the Discovery phase; during this phase the client is discovering suitable servers to establish the communication.

When the Discovery phase is completed, the Session phase starts. However, devices cannot use PPP to transmit data over a network until the LCP (Link Control Protocol) determines the acceptability of the link. LCP packets are already encapsulated in PPP packets. The LCP-over-PPP packets have control code 0xC021, EtherType is configured to 0x8864 and during this communication, the authentication of the client and IP Address association take place. For client authentication, protocols like CHAP or PAP are some of the used solutions, depending of the implementation of the ISP. The Internet Protocol Control Protocol (IPCP) comes after the client authentication is completed and has the role of providing network configuration to the client (e.g., the assigned IP address).

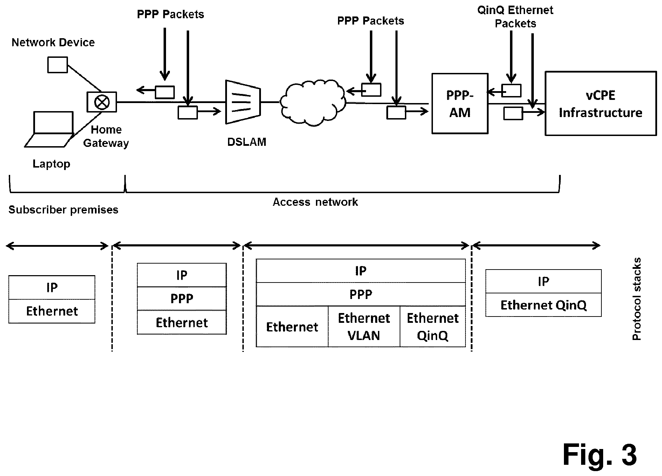

Fig. 3 shows a system according to an embodiment of the present invention.

In Fig. 3 a schematic representation of virtual customer premises equipment architecture adapted to work with the L3 broadband access network is shown. The subscriber's level 2 network is terminated at the home gateway (L3 CPE). After the DSLAM, the network packets may use different level 2 network technologies, such as plain Ethernet, Ethernet VLANs, Ethernet QinQ, etc.. The home gateway HGW establishes a PPP session with the PPP-AM on the one side while it exchanges Ethernet QinQ packets with the virtual customer premises equipment infrastructure on the other side.

In Fig. 3 the conventional vCPE architecture is extended to support L3 access networks. The components of the vCPE architecture are leveraged, enhancing their features with external modules, which can be transparently added when required and removed when not needed anymore. In particular, a PPP Adaptation Module (PPP-AM) is defined: on one side, the PPP-AM terminates PPP/PPPoE sessions, on the other side it mimics the expected interactions with the vCPE infrastructure. Thus the vCPE architecture can continue its evolution independently from the L3 network functions, which may be removed.

In the vCPE architecture, the PPP-AM is located between the subscribers' HGWs and the vCPE infrastructure. The PPP-AM can be bypassed if required, in order to be on the path only for L3 subscribers.

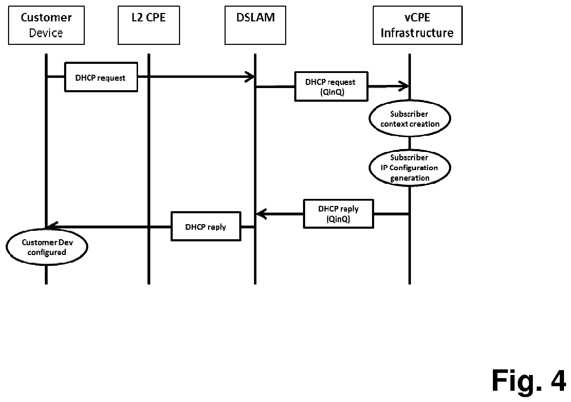

Fig. 4 shows part of steps of a method according to a further embodiment of the present invention.

In Fig. 4 a sequence diagram of a session establishing procedure in a virtual customer premises equipment architecture is shown.

A subscriber's context creation is triggered by a subscriber's device that issues a DHCP request. The DHCP request packet is tagged with a QinQ tag when passing through the operator's network access node. Once received at the vCPE infrastructure, the QinQ tag is used as identifier to:
1) retrieve the subscriber's policy attributes, e.g., performing a request to a RADIUS AAA server;
2) generate an IP address and network configuration for the subscriber, which are finally used to compile a DHCP reply. The DHCP reply is then sent back to the subscriber. After this last step, the subscriber can generate and receive data traffic.

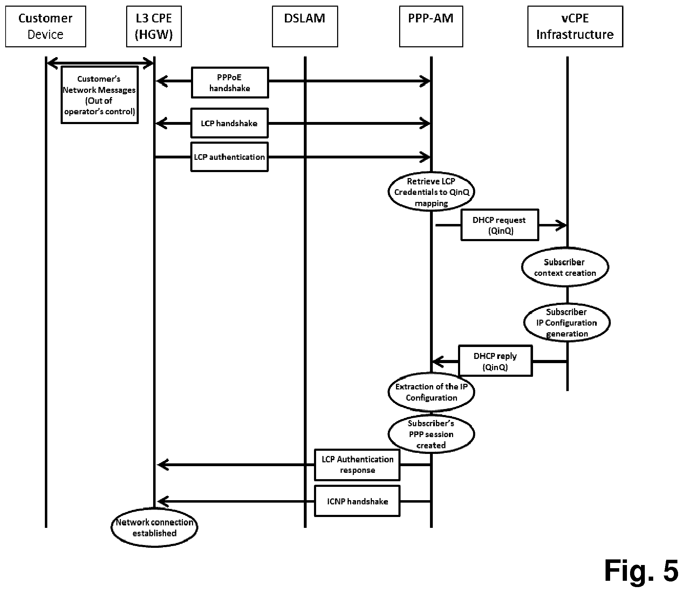

Fig. 5 shows part of the steps of a method according to a further embodiment of the present invention.

In Fig. 5 a sequence diagram of a session establishment in a virtual customer premises equipment architecture is shown when a PPP-AM is used to connect to a level 3 access network.

The PPP-AM follows this procedure of Fig. 4 on the vCPE infrastructure side, while it establishes a PPP session on the subscriber-side. The two procedures are interleaved, in order to enable the creation of a PPP session only if the subscriber context has been created by the vCPE infrastructure. No control interfaces are required to be implemented at the PPP-AM or at the vCPE infrastructure.

In Fig. 5 a subscriber's HGW first performs the PPPoE handshake, then, it starts the PPP link layer setup (LCP handshake). During this phase the HGW provides the subscriber's credentials. The credentials are used to associate the subscriber's identity with a QinQ tag. These mappings can be provided statically, or using an external service ("LCP credentials to QinQ mapping" phase). From this point on, the PPP-AM establishes a subscriber context in the vCPE infrastructure mimicking the behaviour of a subscriber's device in a L2 access network. Thus, a DHCP request is sent to the vCPE infrastructure, which in turns establishes the subscriber's context retrieving the attributes from e.g., a RADIUS server. Then, a DHCP reply is generated and sent to the PPP-AM. The PPP-AM extracts the IP address, assigned to the HGW, and any other relevant information from the DHCP response. This information is used to perform the ICNP configuration phase of the PPP session establishment procedure.

Using the PPP-AM, L3 access network traffic can be injected into the vCPE infrastructure. The PPP-AM may operate entirely on the data plane of the network. The only external configuration that may be required to ensure correct operations is the mapping between subscriber's credentials and QinQ tags.

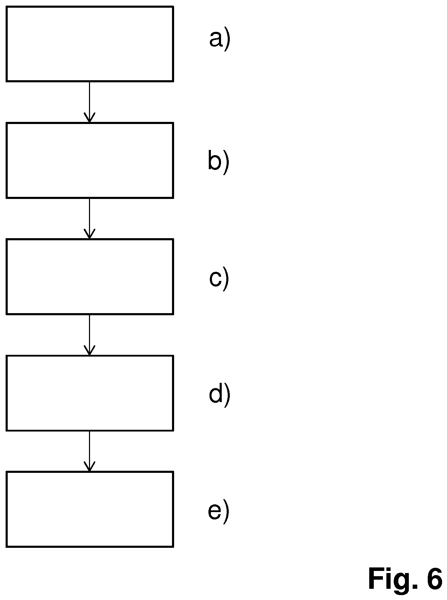

Fig. 6 shows steps of a method according to a further embodiment of the present invention.

In Fig. 6 a method for establishing data traffic between a client device, 'CD' in a client network, and one or more of devices, 'OD', of an operator's network, wherein said OD are connected with said CD via one or more access devices, 'AD', of an access network, wherein said networks are organized in abstraction layers, for example according to the OSI model, and wherein said CD are adapted to work on a first abstraction layer, 'AL', and wherein said OD are adapted to work on a second abstraction layer, comprising the steps of
a) Receiving a session establishment request by said AD from said CD on a first layer,
b) Extracting client information from said session establishment request by said AD,
c) Establishing a session by said AD with said OD on a second layer using said extracted client information, when said second layer being different from said first layer,
d) Extracting client network information from received information from said OD during said session establishment between said AD and said OD,
e) Terminating session establishment with said CD by said AD using said extracted client network information to establish a session between said CD and said OD.

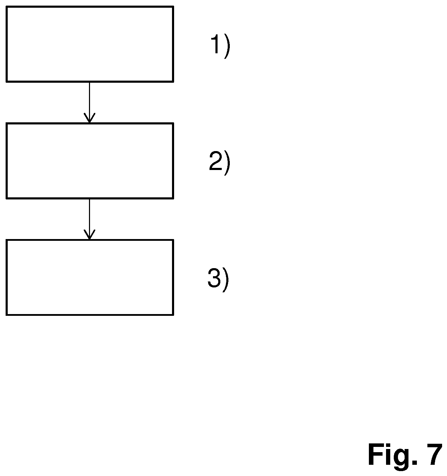

Fig. 7 shows steps of a method according to a further embodiment of the present invention.

Fig. 7 shows steps of a method for establishing a data connection a PPP-AM being deployed on the path between the subscriber's network and a virtual customer premises equipment infrastructure. When a PPP session establishment request is received by the PPP-AM the following steps are performed:
1. The PPP-AM module receives a session establishment request from the subscriber over the L3 network;
2. The PPP-AM module extracts subscriber information from the request and establishes a session with the vCPE infrastructure over the L2 access network;
3. The PPP-AM module extracts the subscriber's network information from the interaction with the vCPE infrastructures and uses such information to terminate the session establishment procedure with the subscriber.

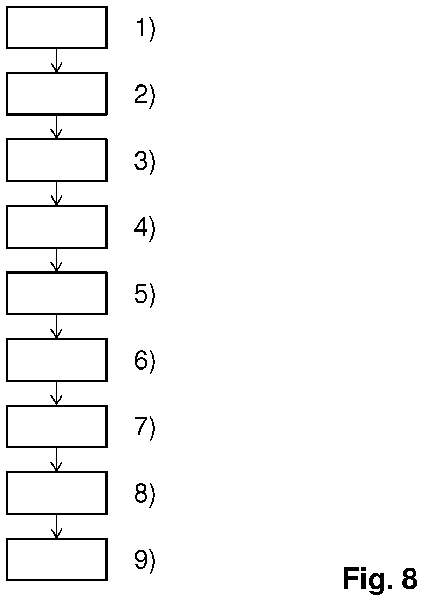

Fig. 8 shows more detailed steps of a method according to Fig. 7.

In Fig. 8 a more detailed description of the steps 1.-3. of Fig. 7 are shown:
1) The PPPoE session is established;
2) The PPP session is initiated and so is the LCP interaction.
3) When the LCP subscriber's credentials are provided, they are used to retrieve a corresponding QinQ tag value; The value can be retrieved from a static list, from an external service, or by any other mean;
4) The retrieved QinQ tag value is used to forge a DHCP request encapsulated in a QinQ Ethernet packet;
5) The DHCP request is sent to the vCPE infrastructure;
6) The DHCP reply is generated by the vCPE infrastructure and received by the PPP-AM;
7) The IP configuration information is extracted from the DHCP reply;
8) The IP configuration information is used to finalize the LCP interaction and to perform the ICNP interaction;
9) After the termination of the ICNP interaction the PPP-AM finalizes the creation of a PPP session for the subscriber, which can now access the network.

In summary at least one embodiment of the present invention enables a definition of a PPP Adaptation Function that provides PPP session management leveraging the DHCP interactions of vCPE architectures to extract relevant information for the establishment of a PPP session, without requiring any additional control plane interfaces or functions.

Further embodiments of the present invention enable to avoid replicated functions which would occur if first layer functions are developed from scratch besides already existing second layer functions like QoS management functions, etc. Even further embodiments of the present invention avoid time consuming and complicating modification of second layer functions to support first layer function

Further the present invention enables supporting level 3 access networks by virtual customer premises equipment architectures: at least one embodiments of the present invention enables a seamless integration of the level 3 access networks without changing the virtual customer premises equipment infrastructure and/or the virtual customer premises architecture.

Many modifications and other embodiments of the invention set forth herein will come to mind to the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A method for establishing a data connection between a client device, 'CD' in a client network, and one or more of devices, 'OD', of an operator's network, wherein said OD are connected with said CD via one or more access devices, 'AD', of an access network, wherein said networks are organized in abstraction layers, for according to the OSI model, and wherein said CD is adapted to work on
a first abstraction layer, 'AL', and wherein said OD are adapted to work on a second AL,
comprising the steps of
a) Receiving (a)) a session establishment request by said AD provided by said CD on said first AL,
b) Extracting (b)) client information from said session establishment request by said AD,
c) Establishing (c)) a session by said AD with said OD on said second AL using said extracted client information, when said second AL being different from said first AL,
d) Extracting (d)) by the AD, client network information from received information from
said OD during said session establishment between said AD and said OD,
e) Terminating (e)) said session establishment with said CD by said AD using said
extracted client network information to establish a session between said CD and said OD to provide a data connection.

2. The method according to claim 1, wherein said first and second AL are adjacent AL.

3. The method according to claim 2, wherein said first AL is a layer 3 according to the OSI model and said second AL is a layer 2 according to the OSI model.

4. The method according to one of the claims 1-3, wherein said AD is bypassed for data traffic when said first and second AL are identical.

5. The method according to one of the claims 1-4, wherein, by said AD, requests on said first AL are tagged with an encap tag representing said client information for transmitting said client information to said OD.

6. The method according to claim 5, wherein said client information are mapped to said encap tag based on a static mapping or provided by a service device.

7. The method according to one of the claims 1-6, wherein said CD provides said session establishment request of step a) by issuing a DHCP request and/or by issuing a PPP request.

8. The method according to one of the claims 1-7, wherein step c) is performed by issuing a DHCP request.

9. The method according to one of the claims 1-8, wherein said client network information include IP configuration information.

10. The method according to claim 5, wherein said encap tag is a QinQ tag.

11. An access device, 'AD', for establishing a data connection between a client device, 'CD' in a client network, and one or more of devices, 'OD', of an operator's network, wherein said OD are connected with said CD via one or more access devices, 'AD', of an access network, wherein said networks are organized in abstraction layers, according to the OSI model, and wherein said CD is adapted to work on a first abstraction layer, 'AL', and wherein said OD are adapted to work on a second AL, wherein the access device, 'AD', is adapted to perform the steps of
a) Receiving (a)) a session establishment request provided by said CD on said first AL,
b) Extracting (b)) client information from said session establishment request,
c) Establishing (c)) a session with said OD on said second AL using said extracted client information, when said second AL being different from said first AL,
d) Extracting (d)) client network information from received information from said OD during said session establishment with said OD,
e) Terminating (e)) said session establishment with said CD using said extracted
client network information to establish a session between said CD and said OD to provide a data connection.

12. A system for establishing a data connection between a client device, 'CD' in a client network, and one or more of devices, 'OD', of an operator's network, wherein said OD are connected with said CD via one or more access devices, 'AD', of an access network, wherein said networks are organized in abstraction layers, for according to the OSI model, and wherein said CD is adapted to work on
a first abstraction layer, 'AL', and wherein said OD are adapted to work on a second AL,
said CD being adapted to
to provide a session establishment request to said AD,
said AD being adapted
to receive said session establishment request provided by said CD on said first AL,
to extract client information from said session establishment request,
to establish a session with said OD on said second AL using said extracted client information, when said second AL being different from said first AL,
to extract client network information from received information from said OD during said session establishment between said AD and said OD, and
to terminate said session establishment with said CD using said extracted client network information to establish a session between said CD and said OD to provide a data connection,
said OD being adapted to
to establish a session with said AD on the second abstraction layer using said extracted client
information, and
to provide said client network information.

13. A non-transitory computer readable medium storing a program causing 2. one or more computers to execute a method for establishing a data connection between a client device, 'CD' in a client network, and one or more of devices, 'OD', of an operator's network, wherein said OD are connected with said CD via one or more access devices, 'AD', being said one or more computers of an access network, wherein said networks are organized in abstraction layers, according to the OSI model, and wherein said CD is adapted to work on a first abstraction layer, 'AL', and wherein said OD are adapted to work on a second AL,
comprising the steps of
a) Receiving (a)) a session establishment request by said AD provided by said CD on said first AL,
b) Extracting (b)) client information from said session establishment request by said AD,
c) Establishing (c)) a session by said AD with said OD on said second AL using said extracted client information, when said second AL being different from said first AL,
d) Extracting (d)), by the AD, client network information from received information from
said OD during said session establishment between said AD and said OD,
e) Terminating (e)) said session establishment with said CD by said AD using said
extracted client network information to establish a session between said CD and said OD to provide a data connection.

## Patentansprüche

1. Verfahren zum Aufbau einer Datenverbindung zwischen einem dienstanfordernden Gerät , 'CD', in einem dienstanfordernden Gerätenetzwerk und einem oder mehreren Geräten , 'OD', eines Betreibernetzwerks, wobei die OD mit dem CD über ein oder mehrere Zugriffsgeräte , 'AD', eines Zugriffsnetzwerks verbunden sind, wobei die Netzwerke in Abstraktionsebenen organisiert sind gemäß dem OSI-Modell und wobei das CD ausgebildet ist, auf einer ersten Abstraktionsebene , 'AL', zu arbeiten und wobei die OD ausgebildet sind, auf einer zweiten AL zu arbeiten,
umfassend die Schritte
a) Erhalten (a)) einer Sitzungsaufbauanfrage durch das AD, bereitgestellt durch das CD auf der ersten AL,
b) Extrahieren (b)) von dienstanfordernden Geräteinformationen aus der Sitzungsaufbauanfrage durch das AD,
c) Aufbauen (c)) einer Sitzung durch das AD mit dem OD auf der zweiten AL unter Benutzung der extrahierten dienstanfordernden Geräteinformationen, wenn die zweite AL sich von der ersten AL unterscheidet,
d) Extrahieren (d)), durch das AD, von dienstanfordernden Gerätenetzwerkinformationen von den erhaltenen Informationen von dem OD während des Sitzungsaufbaus zwischen dem AD und dem OD,
e) Abbrechen (e)) des Sitzungsaufbaus mit dem CD durch das AD unter Benutzung der extrahierten dienstanfordernden Gerätenetzwerkinformationen zum Aufbau einer Sitzung zwischen dem CD und dem OD, um eine Datenverbindung bereitzustellen.

2. Verfahren gemäß Anspruch 1, wobei die erste und die zweite AL benachbarte AL sind.

3. Verfahren gemäß Anspruch 2, wobei die erste AL ein Layer 3 gemäß dem OSI-Modell ist und die zweite AL ein Layer 2 gemäß dem OSI-Modell ist.

4. Verfahren gemäß einem der Ansprüche 1-3, wobei das AD für Datenverkehr umgangen wird, wenn erste und zweite AL identisch sind.

5. Verfahren gemäß einem der Ansprüche 1-4, wobei, durch das AD, Anfragen auf der ersten AL markiert werden mit einer Einschlussmarkierung, welche die dienstanfordernden Geräteinformationen zum Übertragen der dienstanfordernden Geräteinformationen zu dem OD repräsentiert.

6. Verfahren gemäß Anspruch 5, wobei die dienstanfordernden Geräteinformationen auf die Einschlussmarkierung abgebildet werden basierend auf einem statischen Abbilden oder bereitgestellt durch ein Dienstgerät.

7. Verfahren gemäß einem der Ansprüche 1-6, wobei das CD die Sitzungsaufbauanfrage von Schritt a) bereitstellt durch Ausgabe einer DHCP Anfrage und/oder durch Ausgabe einer PPP Anfrage.

8. Verfahren gemäß einem der Ansprüche 1-7, wobei Schritt c) mittels Ausgabe einer DHCP-Anfrage durchgeführt wird.

9. Verfahren gemäß einem der Ansprüche 1-8, wobei die dienstanfordernden Gerätenetzwerkinformationen IP Konfigurationsinformationen umfassen.

10. Verfahren gemäß Anspruch 5, wobei die Einschlussmarkierung eine QinQ-Markierung ist.

11. Zugriffsgerät , 'AD', zum Aufbau einer Datenverbindung zwischen einem dienstanfordernden Gerät , 'CD', in einem dienstanfordernden Gerätenetzwerk und einem oder mehreren Geräten , 'OD', eines Betreibernetzwerks, wobei die OD mit dem CD über ein oder mehrere Zugriffsgeräte , 'AD', eines Zugriffsnetzwerks verbunden sind, wobei die Netzwerke in Abstraktionsebenen organisiert ist gemäß dem OSI-
Modell und wobei das CD ausgebildet ist, auf einer ersten Abstraktionsebene , 'AL', zu arbeiten und wobei die OD ausgebildet sind, auf einer zweiten AL zu arbeiten und wobei das Zugriffsgerät , 'AD', ausgebildet ist, zur Durchführung der Schritte
a) Erhalten (a)) einer Sitzungsaufbauanfrage, bereitgestellt durch das CD auf der ersten AL,
b) Extrahieren (b)) von dienstanfordernden Geräteinformationen aus der Sitzungsaufbauanfrage,
c) Aufbauen (c)) einer Sitzung mit dem OD auf der zweiten AL unter Benutzung der extrahierten dienstanfordernden Geräteinformationen, wenn die zweite AL sich von der ersten AL unterscheidet,
d) Extrahieren (d)) von dienstanfordernden Gerätenetzwerkinformationen von den erhaltenen Informationen von dem OD während des Sitzungsaufbaus mit dem OD,
e) Abbrechen (e)) des Sitzungsaufbaus mit dem CD unter Benutzung der extrahierten dienstanfordernden Gerätenetzwerkinformationen zum Aufbau einer Sitzung zwischen dem CD und dem OD, um eine Datenverbindung bereitzustellen.

12. System zum Aufbau einer Datenverbindung zwischen einem dienstanfordernden Gerät , 'CD', in einem dienstanfordernden Gerätenetzwerk und einem oder mehreren Geräten , 'OD', eines Betreibernetzwerks, wobei die OD mit dem CD über ein oder mehrere Zugriffsgeräte , 'AD', eines Zugriffsnetzwerks verbunden sind, wobei die Netzwerke in Abstraktionsebenen organisiert sind gemäß dem OSI-Modell und wobei das CD ausgebildet ist auf einer ersten Abstraktionsebene , 'AL', zu arbeiten und wobei die OD ausgebildet sind, auf einer zweiten AL zu arbeiten,
wobei das CD ausgebildet ist zum Bereitstellen einer Sitzungsaufbauanfrage zu dem AD,
wobei das AD ausgebildet ist zum
Erhalten der Sitzungsaufbauanfrage, bereitgestellt durch das CD auf der ersten AL, zum
Extrahieren von dienstanfordernden Geräteinformationen aus der Sitzungsaufbauanfrage, zum
Aufbauen einer Sitzung mit dem OD auf der zweiten AL unter Benutzung der extrahierten dienstanfordernden Geräteinformationen, wenn die zweite AL sich von der ersten AL unterscheidet, zum
Extrahieren von dienstanfordernden Gerätenetzwerkinformationen von den erhaltenen Informationen von dem OD während des Sitzungsaufbaus zwischen dem AD und dem OD, und zum
Abbrechen des Sitzungsaufbaus mit dem CD unter Benutzung der extrahierten dienstanfordernden Gerätenetzwerkinformationen zum Aufbau einer Sitzung zwischen dem CD und dem OD, um eine Datenverbindung bereitzustellen,
und wobei das OD ausgebildet ist zum
Aufbauen einer Sitzung mit dem AD auf der zweiten Abstraktionsebene unter Benutzung der extrahierten dienstanfordernden Geräteinformationen und zum Bereitstellen der dienstanfordernden Gerätenetzwerkinformationen.

13. Ein nichtflüchtiges Computer-lesbares Medium, welches ein Programm speichert, welches einen oder mehrere Computer veranlasst ein Verfahren durchzuführen zum Aufbau einer Datenverbindung zwischen einem dienstanfordernden Gerät , 'CD', in einem dienstanfordernden Gerätenetzwerk und einem oder mehreren Geräten, 'OD', eines Betreibernetzwerks, wobei die OD mit den CD über ein oder mehrere Zugriffsgeräte , 'AD', eines Zugriffsnetzwerks verbunden sind, wobei die Netzwerke in Abstraktionsebenen organisiert sind gemäß dem OSI-Modell und wobei das CD ausgebildet ist, auf einer ersten Abstraktionsebene , 'AL', zu arbeiten und wobei die OD ausgebildet sind, auf einer zweiten AL zu arbeiten, umfassend die Schritte
a) Erhalten (a)) einer Sitzungsaufbauanfrage durch das AD, bereitgestellt durch das CD auf der ersten AL,
b) Extrahieren (b)) von dienstanfordernden Geräteinformationen aus der Sitzungsaufbauanfrage durch das AD,
c) Aufbauen (c)) einer Sitzung durch das AD mit dem OD auf der zweiten AL unter Benutzung der extrahierten dienstanfordernden Geräteinformationen, wenn die zweite AL sich von der ersten AL unterscheidet,
d) Extrahieren (d)) durch das AD, von dienstanfordernden Gerätenetzwerkinformationen von den erhaltenen Informationen von dem OD während des Sitzungsaufbaus zwischen dem AD und dem OD,
e) Abbrechen (e)) des Sitzungsaufbaus mit dem CD durch das AD unter Benutzung der extrahierten dienstanfordernden Gerätenetzwerkinformationen zum Aufbau einer Sitzung zwischen dem CD und dem OD um eine Datenverbindung bereitzustellen.

## Revendications

1. Procédé d'établissement d'une connexion de données entre un dispositif client, 'CD' dans un réseau client, et un ou plusieurs de dispositifs, 'OD', d'un réseau d'opérateur, dans lequel lesdits OD sont connectés audit CD via un ou plusieurs dispositifs d'accès, 'AD', d'un réseau d'accès, dans lequel lesdits réseaux sont organisés en couches d'abstraction, selon le modèle OSI, et dans lequel ledit CD est adapté pour fonctionner sur une première couche d'abstraction, 'AL', et dans lequel lesdits OD sont adaptés pour fonctionner sur une deuxième AL,
comprenant les étapes de
a) réception (a)) d'une demande d'établissement de session par ledit AD fournie par ledit CD sur ladite première AL,
b) extraction (b)) d'informations de client à partir de ladite demande d'établissement de session par ledit AD,
c) établissement (c)) d'une session par ledit AD avec lesdits OD sur ladite deuxième AL à l'aide desdites informations de client extraites, lorsque ladite deuxième AL est différente de ladite première AL,
d) extraction (d)), par l'AD, d'informations de réseau client à partir d'informations reçues depuis lesdits OD pendant ledit établissement de session entre ledit AD et lesdits OD,
e) cessation (e)) dudit établissement de session avec ledit CD par ledit AD à l'aide desdites informations de réseau client extraites pour établir une session entre ledit CD et lesdits OD afin de fournir une connexion de données.

2. Procédé selon la revendication 1, dans lequel lesdites première et deuxième AL sont des AL adjacentes.

3. Procédé selon la revendication 2, dans lequel ladite première AL est une couche 3 selon le modèle OSI et ladite deuxième AL est une couche 2 selon le modèle OSI.

4. Procédé selon l'une des revendications 1 à 3, dans lequel ledit AD est contourné pour un trafic de données lorsque lesdites première et deuxième AL sont identiques.

5. Procédé selon l'une des revendications 1 à 4, dans lequel, par ledit AD, des demandes sur ladite première AL sont étiquetées avec une étiquette d'encapsulation représentant lesdites informations de client pour transmettre lesdites informations de client auxdits OD.

6. Procédé selon la revendication 5, dans lequel lesdites informations de client sont mappées sur ladite étiquette d'encapsulation sur la base d'un mappage statique ou fournies par un dispositif de service.

7. Procédé selon l'une des revendications 1 à 6, dans lequel ledit CD fournit ladite demande d'établissement de session de l'étape a) en émettant une demande DHCP et/ou en émettant une demande PPP.

8. Procédé selon l'une des revendications 1 à 7, dans lequel l'étape c) est réalisée par l'émission d'une demande DHCP.

9. Procédé selon l'une des revendications 1 à 8, dans lequel lesdites informations de réseau client comportent des informations de configuration IP.

10. Procédé selon la revendication 5, dans lequel ladite étiquette d'encapsulation est une étiquette QinQ.

11. Dispositif d'accès, 'AD', pour établir une connexion de données entre un dispositif client, 'CD' dans un réseau client, et un ou plusieurs de dispositifs, 'OD', d'un réseau d'opérateur, dans lequel lesdits OD sont connectés audit CD via un ou plusieurs dispositifs d'accès, 'AD', d'un réseau d'accès, dans lequel lesdits réseaux sont organisés en couches d'abstraction, selon le modèle OSI, et dans lequel ledit CD est adapté pour fonctionner sur une première couche d'abstraction, 'AL', et dans lequel lesdits OD sont adaptés pour fonctionner sur une deuxième AL,
dans lequel le dispositif d'accès, 'AD', est adapté pour réaliser les étapes de
a) réception (a)) d'une demande d'établissement de session fournie par ledit CD sur ladite première AL,
b) extraction (b)) d'informations de client à partir de ladite demande d'établissement de session,
c) établissement (c)) d'une session avec lesdits OD sur ladite deuxième AL à l'aide desdites informations de client extraites, lorsque ladite deuxième AL est différente de ladite première AL,
d) extraction (d)), d'informations de réseau client à partir d'informations reçues depuis lesdits OD pendant ledit établissement de session avec ledit OD,
e) cessation (e)) dudit établissement de session avec ledit CD à l'aide desdites informations de réseau client extraites pour établir une session entre ledit CD et lesdits OD afin de fournir une connexion de données.

12. Système d'établissement d'une connexion de données entre un dispositif client, 'CD' dans un réseau client, et un ou plusieurs de dispositifs, 'OD', d'un réseau d'opérateur, dans lequel lesdits OD sont connectés audit CD via un ou plusieurs dispositifs d'accès, 'AD', d'un réseau d'accès, dans lequel lesdits réseaux sont organisés en couches d'abstraction, selon le modèle OSI, et dans lequel ledit CD est adapté pour fonctionner sur une première couche d'abstraction, 'AL', et dans lequel lesdits OD sont adaptés pour fonctionner sur une deuxième AL,
ledit CD étant adapté
pour fournir une demande d'établissement de session audit AD,
ledit AD étant adapté
pour recevoir ladite demande d'établissement de session fournie par ledit CD sur ladite première AL,
pour extraire des informations de client à partir de ladite demande d'établissement de session,
pour établir une session avec ledit OD sur ladite deuxième AL à l'aide desdites informations de client extraites, lorsque ladite deuxième AL est différente de ladite première AL,
pour extraire des informations de réseau client à partir d'informations reçues depuis lesdits OD pendant ledit établissement de session entre ledit AD et lesdits OD, et
pour cesser ledit établissement de session avec ledit CD à l'aide desdites informations de réseau de client extraites pour établir une session entre ledit CD et lesdits OD afin de fournir une connexion de données,
lesdits OD étant adaptés
pour établir une session avec ledit AD sur la deuxième couche d'abstraction à l'aide desdites informations de client extraites, et
pour fournir lesdites informations de réseau client.

13. Support lisible par ordinateur non transitoire stockant un programme amenant un ou plusieurs ordinateurs à exécuter un procédé d'établissement d'une connexion de données entre un dispositif client, 'CD' dans un réseau client, et un ou plusieurs de dispositifs, 'OD', d'un réseau d'opérateur, dans lequel lesdits OD sont connectés audit CD via un ou plusieurs dispositifs d'accès, 'AD', qui sont lesdits un ou plusieurs ordinateurs d'un réseau d'accès, dans lequel lesdits réseaux sont organisés en couches d'abstraction, selon le modèle OSI, et dans lequel ledit CD est adapté pour fonctionner sur une première couche d'abstraction, 'AL', et dans lequel lesdits OD sont adaptés pour fonctionner sur une deuxième AL,
comprenant les étapes de
a) réception (a)) d'une demande d'établissement de session par ledit AD fournie par ledit CD sur ladite première AL,
b) extraction (b)) d'informations de client à partir de ladite demande d'établissement de session par ledit AD,
c) établissement (c)) d'une session par ledit AD avec lesdits OD sur ladite deuxième AL à l'aide desdites informations de client extraites, lorsque ladite deuxième AL est différente de ladite première AL,
d) extraction (d)), par l'AD, d'informations de réseau client à partir d'informations reçues depuis lesdits OD pendant ledit établissement de session entre ledit AD et lesdits OD,
e) cessation (e)) dudit établissement de session avec ledit CD par ledit AD à l'aide desdites informations de réseau client extraites pour établir une session entre ledit CD et lesdits OD afin de fournir une connexion de données.
